# EUROPEAN PATENT APPLICATION

(11) **EP 4 663 526 A1**
(43) Date of publication of application: **17.12.2025**
(21) Application number: 23937561.1
(22) Date of filing: 30.06.2023
(51) Int. Cl.: B62J 27/00, B62M 7/02

(54) **SADDLE-TYPE VEHICLE**

(30) Priority: 17.05.2023 JP 2023081324
(71) Applicant: Yamaha Hatsudoki Kabushiki Kaisha, Iwata-shi, Shizuoka 438-8501 (JP)
(72) Inventor: MIYASHIRO, Shidehiko, Iwata-shi Shizuoka 438-8501 (JP)
(74) Representative: Grünecker Patent- und Rechtsanwälte PartG mbB
(86) International application number: PCT/JP2023/024408
(87) International publication number: WO 2024/236825

(57) **Abstract**

An object is to provide a straddled vehicle capable of sufficiently securing the grip force of the rear wheel during acceleration and the grip force of the front wheel during deceleration. A motorcycle (1) includes an electric motor (60), a rotating shaft (63) driven by the electric motor (60), a flywheel (66) fixed to the rotating shaft (63), and a motor controller (70) that controls the electric motor (60). The motor controller (70) rotates the flywheel (66) while accelerating the flywheel (66) in the forward rotation direction A when the motorcycle (1) is accelerating, and rotates the flywheel (66) while accelerating the flywheel (66) in the reverse rotation direction B when the motorcycle (1) is decelerating.

## Description

### Technical Field

The present invention relates to a straddled vehicle.

### Background Art

With straddled vehicles such as motorcycles (see, for example, JP 2023-38648 A), it is desirable to secure the grip force of the rear wheel during acceleration and the grip force of the front wheel during deceleration in order to achieve desirable acceleration and deceleration. Note that grip force refers to the frictional force between the wheel and the ground. Increasing the downward load on the rear wheel increases the grip force of the rear wheel, and increasing the downward load on the front wheel increases the grip force of the front wheel. Therefore, in order to ensure grip force, it is conceivable to increase the downward load on the rear wheel during acceleration and increase the downward load on the front wheel during deceleration.

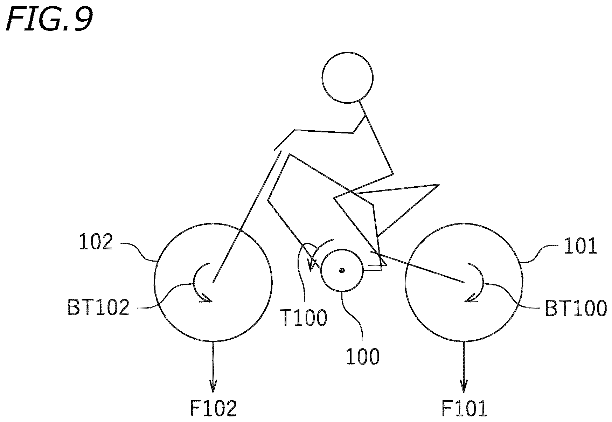

As shown in FIG. 9, with a straddled vehicle having an internal combustion engine 100 as a driving source for traveling, the rotational speed of the crank shaft (not shown) of the internal combustion engine 100 increases during acceleration, thereby generating a rotational moment T100. A torque BT100 in the opposite direction to the rotational moment T100 is generated at the rear wheel 101 as a reaction force to the rotational moment T100. This torque BT100 increases the downward load F101 on the rear wheel 101. Therefore, the grip force of the rear wheel 101 increases during acceleration. On the other hand, the rotational speed of the crank shaft of the internal combustion engine 100 decreases during deceleration, thereby generating a rotational moment opposite to the rotational moment T100. A torque BT102 in the opposite direction to the rotational moment is generated at the front wheel 102 as a reaction force to the rotational moment. This torque BT102 increases the downward load F102 on the front wheel 102. Therefore, the grip force of the front wheel 102 increases during deceleration.

### Citation List

### Patent Literature

Patent Literature 1: JP 2023-38648 A

### Summary of Invention

### Technical Problem

Now, straddled vehicles may travel on slippery ground, such as road surfaces in rainy weather or gravel roads, for example. Here, it is conceivable to increase the rotational moment during acceleration and deceleration so as to achieve desirable acceleration and deceleration even when traveling on slippery ground. For example, it is conceivable to increase the rotational moment during acceleration and deceleration by expanding the rotational speed range of the crank shaft or increasing the weight of the crank shaft. In that case, however, the internal combustion engine becomes larger and heavier.

In recent years, straddled vehicles have been known in the art that have electric motors as a driving source for traveling. Straddled vehicles having electric motors do not have transmissions. With straddled vehicles having electric motors, motor shafts are provided instead of crank shafts as drive shafts for traveling. Here, the moment of inertia of the motor shaft is smaller than that of the crank shaft. At the same driving speed, the rotational speed of the motor shaft tends to be smaller than that of the crank shaft. This tendency is particularly pronounced when the traveling speed is relatively low. Therefore, the rotational moment generated on the drive shaft during acceleration and deceleration is smaller when the motor shaft is the drive shaft than when the crank shaft is the drive shaft. Therefore, with a straddled vehicle having an electric motor, the torque as the reaction force mentioned above is smaller than that with a straddled vehicle having an internal combustion engine, and thus the grip force of the rear wheel during acceleration and the grip force of the front wheel during deceleration are smaller.

The present invention has been made in view of such a problem, and an object thereof is to provide a straddled vehicle capable of sufficiently securing the grip force of the rear wheel during acceleration and the grip force of the front wheel during deceleration.

### Solution to Problem

A straddled vehicle disclosed herein is a straddled vehicle including a front wheel, a rear wheel arranged rearward relative to the front wheel, a vehicle body frame supported by the front wheel and the rear wheel, and a driving source for traveling for driving at least one of the front wheel and the rear wheel. The straddled vehicle includes a first electric motor, a rotating shaft extending in a vehicle left-right direction that is driven by the first electric motor, a flywheel arranged rearward of the front wheel and forward of the rear wheel that is fixed to the rotating shaft, and a motor controller. The motor controller controls the first electric motor so as to rotate the flywheel while accelerating the flywheel in a forward rotation direction when the straddled vehicle is accelerating and rotate the flywheel while accelerating the flywheel in a reverse rotation direction when the straddled vehicle is decelerating, wherein the forward rotation direction refers to a rotation direction of the front wheel and the rear wheel when the straddled vehicle is traveling, and the reverse rotation direction refers to an opposite direction to the forward rotation direction.

With the straddled vehicle described above, the flywheel rotates while accelerating in the forward rotation direction during acceleration. This generates a torque in the reverse rotation direction on the rear wheel, thereby increasing the downward load on the rear wheel. Therefore, it is possible to increase the grip force of the rear wheel during acceleration. On the other hand, the flywheel rotates while accelerating in the reverse rotation direction during deceleration. This generates a torque in the forward rotation direction on the front wheel, thereby increasing the downward load on the front wheel. Therefore, it is possible to increase the grip force of the front wheel during deceleration.

The straddled vehicle may include a front suspension linked to the front wheel and the vehicle body frame, a rear suspension linked to the rear wheel and the vehicle body frame, and a power transmission mechanism that links the driving source for traveling and the rear wheel and transmits power from the driving source for traveling to the rear wheel. The driving source for traveling may be supported by the vehicle body frame.

The flywheel may be attached directly or indirectly to the vehicle body frame.

The straddled vehicle includes a handlebar supported by the vehicle body frame, an accelerator grip rotatably attached to the handlebar, and an accelerator operation sensor that detects an operation of the accelerator grip by a passenger. The motor controller may be configured to control the first electric motor based on a detection result of the accelerator operation sensor.

Thus, it is possible to increase the grip force of the front wheel or the rear wheel according to an operation of the accelerator grip by the passenger.

The motor controller may be configured to increase an angular acceleration of the first electric motor in proportion to a rotational speed of the accelerator grip when the straddled vehicle is accelerating.

Thus, it is possible to increase the grip force of the rear wheel in proportion to the acceleration of the straddled vehicle. Therefore, it is possible to realize desirable acceleration.

The driving source for traveling may include a second electric motor.

With conventional electric vehicles, there was a tendency that it was difficult to obtaining a grip force of the rear wheel during acceleration. Also, there was a tendency that it was difficult to obtain a grip force of the front wheel during deceleration. According to the above, however, even though the straddled vehicle is an electric vehicle, it is possible to sufficiently secure the grip force of the rear wheel during acceleration and the grip force of the front wheel during deceleration.

The motor controller may be configured to control the first electric motor based on an operation of the second electric motor.

Thus, it is possible to adjust the grip force of the front wheel or the rear wheel in accordance with acceleration or deceleration of the straddled vehicle.

The motor controller may be configured to, when a torque of the second electric motor is greater than zero, increase an angular acceleration in the forward rotation direction of the first electric motor in proportion to the torque of the second electric motor.

Thus, it is possible to increase the grip force of the rear wheel in proportion to the acceleration of the straddled vehicle. Therefore, it is possible to realize desirable acceleration.

The motor controller may be configured to, when a torque of the second electric motor is smaller than zero, increase an angular acceleration in the reverse rotation direction of the first electric motor in inverse proportion to the torque of the second electric motor.

Thus, it is possible to increase the grip force of the front wheel in proportion to the deceleration of the straddled vehicle. Therefore, it is possible to realize desirable deceleration.

The first electric motor may be arranged upward relative to the second electric motor.

The straddled vehicle may be a motorcycle.

### Advantageous Effects of Invention

According to the present invention, it is possible to provide a straddled vehicle capable of sufficiently securing the grip force of the rear wheel during acceleration and the grip force of the front wheel during deceleration.

### Brief Description of Drawings

[FIG. 1] FIG. 1 is a left side view of a motorcycle according to an embodiment.
[FIG. 2] FIG. 2 is a front view of a motorcycle according to the embodiment.
[FIG. 3] FIG. 3 is a cross-sectional view of the flywheel motor and the flywheel.
[FIG. 4] FIG. 4 is a side view schematically showing the motorcycle when the flywheel rotates while accelerating in the forward rotation direction.
[FIG. 5] FIG. 5 is a side view schematically showing the motorcycle when the flywheel rotates while accelerating in the reverse rotation direction.
[FIG. 6] FIG. 6 is a block diagram of the control system for the drive motor and the flywheel motor.
[FIG. 7] FIG. 7 is a graph showing the relationship between the rotational speed of the accelerator grip and the angular acceleration of the flywheel motor.
[FIG. 8] FIG. 8 is a graph showing the relationship between the torque of the drive motor and the angular acceleration of the flywheel motor.
[FIG. 9] FIG. 9 is a side view schematically showing a conventional straddled vehicle having an internal combustion engine.

### Description of Embodiments

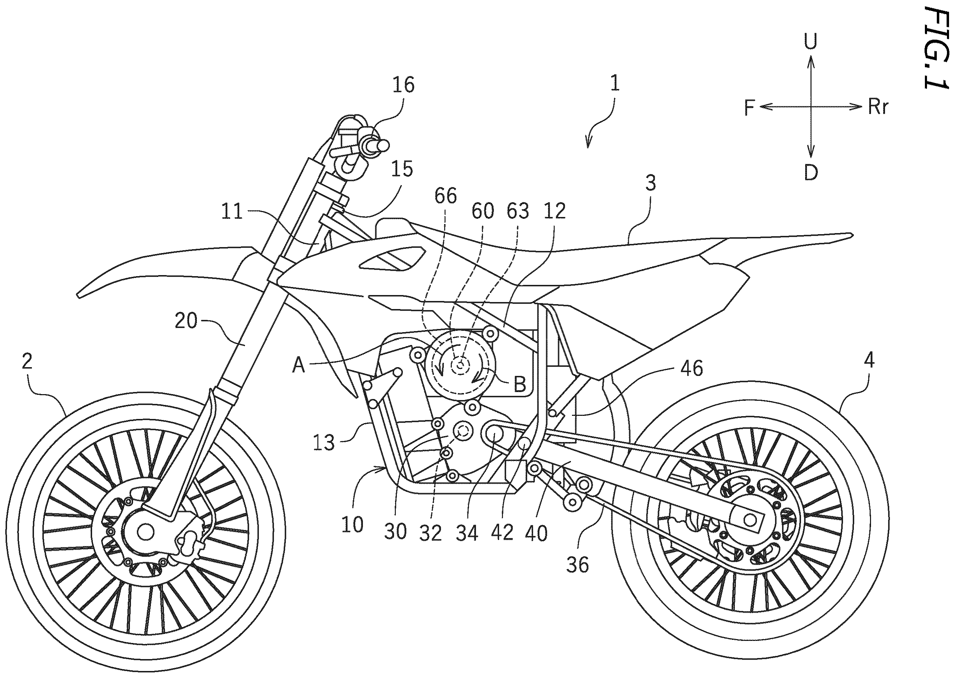

The present invention will now be described with reference to the accompanying drawings. As shown in FIG. 1, the straddled vehicle according to the present embodiment is a motocross-type motorcycle 1.

The terms front, rear, left, right, up, and down, as used in the description below, refer to these directions as seen from a virtual passenger seated on a seat 3 while the motorcycle 1 is standing upright on a horizontal surface with no passenger and no load thereon, unless specified otherwise. The designations F, Rr, L, R, U, and D, as used in the figures, refer to front, rear, left, right, up, and down, respectively.

The motorcycle 1 includes the seat 3 on which the passenger sits, a front wheel 2, a rear wheel 4 arranged rearward of the front wheel 2, and a vehicle body frame 10 supported by the front wheel 2 and the rear wheel 4. The vehicle body frame 10 includes a head pipe 11 arranged forward of the seat 3, a main frame 12 extending rearward and downward from the head pipe 11, and a lower frame 13 extending rearward and downward from the head pipe 11 and arranged downward of the main frame 12. The seat 3 is supported by the vehicle body frame 10.

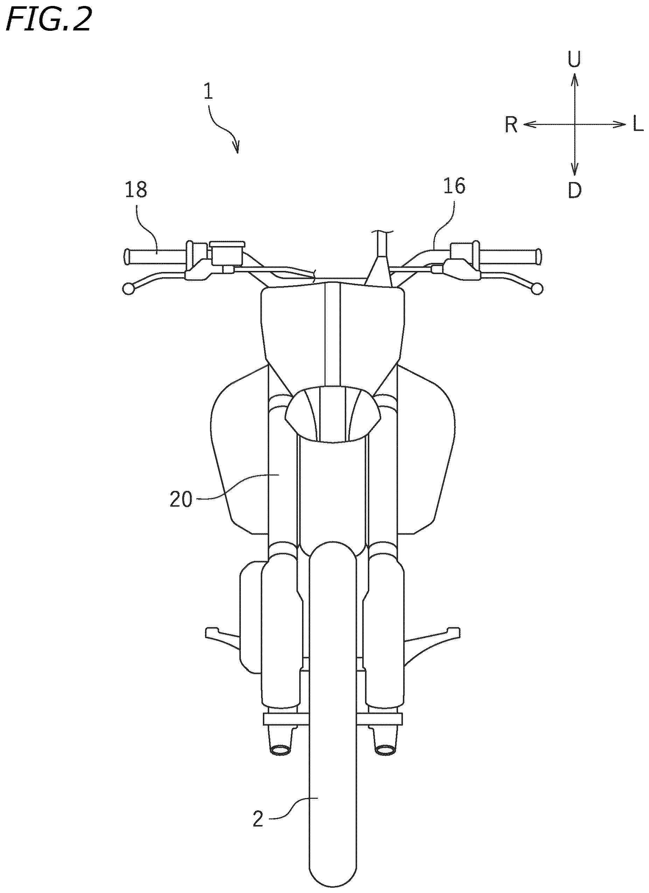

A steering shaft 15 is rotatably supported by the head pipe 11. A handlebar 16 extending leftward and rightward is fixed to the upper portion of the steering shaft 15. The handlebar 16 is supported by the vehicle body frame 10 via the steering shaft 15. As shown in FIG. 2, an accelerator grip 18 is attached to the right end portion of the handlebar 16. The accelerator grip 18 is rotatably attached to the handlebar 16.

As shown in FIG. 1, a front fork 20 is fixed to the lower portion of the steering shaft 15. The front wheel 2 is attached to the lower end portion of the front fork 20. The front fork 20 is an example of the "front suspension" linked to the front wheel 2 and the vehicle body frame 10. The front fork 20 has springs (not shown). The structure of the front fork 20 is well known, and its description will be omitted.

The motorcycle 1 has an electric motor 30 as the "driving source for traveling". Note that the driving source for traveling is a driving source that outputs power for the motorcycle 1 to travel. Hereinafter, the electric motor 30 will be referred to as the drive motor 30. The drive motor 30 is supported by the vehicle body frame 10. The drive motor 30 includes a drive shaft 32 extending in the left-right direction. The drive shaft 32 is linked to an output shaft 34 via a plurality of gears (not shown). The rotation of the drive shaft 32 is reduced by the gears and transmitted to the output shaft 34.

The output shaft 34 is linked to the rear wheel 4 via a chain 36. The chain 36 is an example of the "power transmission member". The chain 36 links the electric motor 30 and the rear wheel 4. The chain 36 transmits power from the electric motor 30 to the rear wheel 4.

The vehicle body frame 10 and the rear wheel 4 are connected by a rear arm 40. The front end portion of the rear arm 40 is pivotally connected to the vehicle body frame 10 by a pivot shaft 42. The rear wheel 4 is rotatably connected to the rear end portion of the rear arm 40.

A rear suspension 46 is connected to the vehicle body frame 10 and the rear arm 40. The upper end portion of the rear suspension 46 is pivotally connected to the vehicle body frame 10, and the lower end portion of the rear suspension 46 is pivotally connected to the rear arm 40. The rear suspension 46 is linked to the rear wheel 4 via the rear arm 40.

As shown in FIG. 1, the motorcycle 1 has an electric motor 60 and a flywheel 66. The electric motor 60 and the flywheel 66 are attached directly or indirectly to the vehicle body frame 10. As will be described in detail below, the electric motor 60 serves to improve the grip force of the front wheel 2 or the rear wheel 4 by rotating the flywheel 66. Hereinafter, the electric motor 60 will be referred to as the flywheel motor 60. The flywheel motor 60 and the flywheel 66 are arranged upward relative to the drive motor 30. Note that the flywheel motor 60 and the drive motor 30 are examples of the "first electric motor" and the "second electric motor", respectively.

The flywheel motor 60 and the flywheel 66 are connected to the front wheel 2 via the front fork 20 and to the rear wheel 4 via the rear suspension 46. The front fork 20 is interposed between the flywheel 66 and the front wheel 2, and the rear suspension 46 is interposed between the flywheel 66 and the rear wheel 4. The flywheel motor 60 and the flywheel 66 are arranged on a so-called spring.

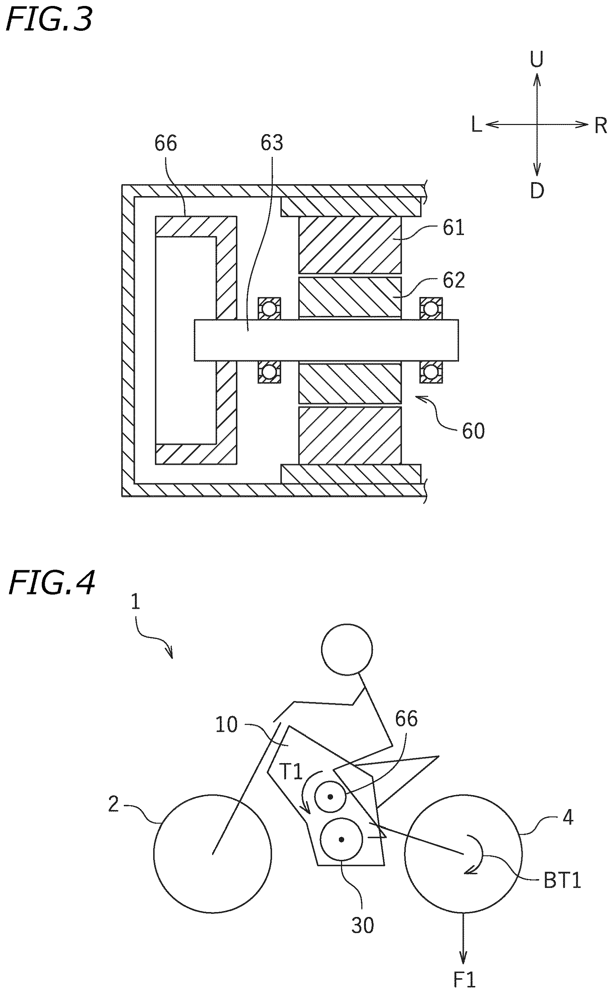

As shown in FIG. 3, the flywheel motor 60 includes a stator 61 and a rotor 62. A rotating shaft 63 extending in the vehicle left-right direction is fixed to the rotor 62. In the present embodiment, the rotating shaft 63 is a so-called motor shaft directly fixed to the rotor 62. Note however that there is no particular limitation on the configuration of the rotating shaft 63. The rotating shaft 63 may be a shaft that is linked directly or indirectly to the motor shaft fixed directly to the rotor 62. Where the rotating shaft 63 and the motor shaft are separate, the rotating shaft 63 and the motor shaft may be arranged on the same straight line, and the axis of the rotating shaft 63 and the axis of the motor shaft may be offset from each other.

The flywheel 66 is fixed to the rotating shaft 63. When the flywheel motor 60 is driven, the rotating shaft 63 rotates, and the flywheel 66 rotates together with the rotating shaft 63. The flywheel motor 60 can rotate in both directions. Hereinafter, the counterclockwise rotation direction and the clockwise rotation direction of FIG. 1 will be referred to as the forward rotation direction and the reverse rotation direction, respectively. The symbol A indicates the forward rotation direction, and the symbol B indicates the reverse rotation direction. The forward rotation direction is the rotation direction of the front wheel 2 and the rear wheel 4 when the motorcycle 1 is traveling. The reverse rotation direction is the opposite direction to the forward rotation direction.

As schematically shown in FIG. 4, when the flywheel motor 60 rotates the flywheel 66 while accelerating the flywheel 66 in the forward rotation direction, a rotational moment T1 in the forward rotation direction is generated in the vehicle body frame 10. A torque BT1 in the opposite direction to the rotational moment T1 is generated at the rear wheel 4 as a reaction force to the rotational moment T1. This torque BT1 increases the downward load F1 on the rear wheel 4. This increases the grip force of the rear wheel 4.

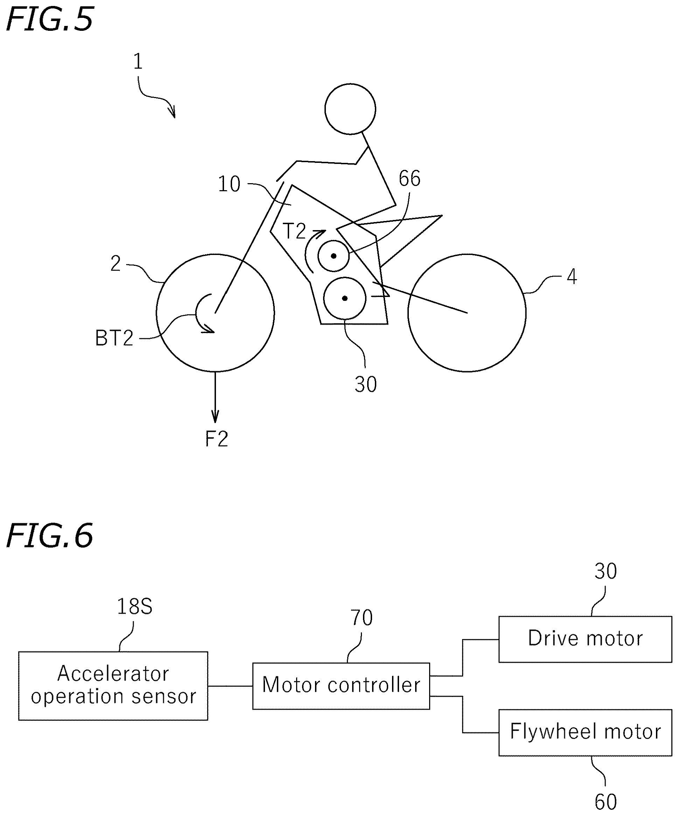

As schematically shown in FIG. 5, when the flywheel motor 60 rotates the flywheel 66 while accelerating the flywheel 66 in the reverse rotation direction, a rotational moment T2 in the reverse rotation direction is generated in the vehicle body frame 10. A torque BT2 in the opposite direction to the rotational moment T2 is generated in the front wheel 2 as a reaction force to the rotational moment T2. This torque BT2 increases the downward load F2 on the front wheel 2. Thus, the grip force of the front wheel 2 is increased.

As shown in FIG. 6, the motorcycle 1 has a motor controller 70 that controls the drive motor 30 and the flywheel motor 60. The motor controller 70 is composed of an ECU (Electronic Control Unit) having a CPU, a ROM, and a RAM, etc. Note that in the present embodiment, the motor controller 70 is configured to control both the drive motor 30 and the electric motor 60, but the motor controller for controlling the drive motor 30 and the motor controller for controlling the electric motor 60 may be separate.

In the present embodiment, the motor controller 70 can control the flywheel motor 60 when the motorcycle 1 is accelerating to thereby rotate the flywheel 66 while accelerating the flywheel 66 in the forward rotation direction. This increases the grip force of the rear wheel 4, thereby enabling the motorcycle 1 to accelerate desirably. The motor controller 70 can also control the flywheel motor 60 when the motorcycle 1 is decelerating to thereby rotate the flywheel 66 while accelerating the flywheel 66 in the reverse rotation direction. This increases the grip force of the front wheel 2, thereby enabling the motorcycle 1 to decelerate desirably.

As shown in FIG. 6, the motorcycle 1 has an accelerator operation sensor 18S that detects the operation of the accelerator grip 18 by the passenger. The accelerator operation sensor 18S is configured to detect the rotational position of the accelerator grip 18. The motor controller 70 is configured to control the drive motor 30 and the flywheel motor 60 based on the detection result of the accelerator operation sensor 18S. In the present embodiment, the motor controller 70 controls the drive motor 30 and the flywheel motor 60 based on the rotational position and rotational speed of the accelerator grip 18. Note that the rotational speed of the accelerator grip 18 refers to the amount of change in the rotational position per unit time with respect to the accelerator grip 18. Note that the rotational position of the accelerator grip 18 can be expressed as the angle from the reference position of the accelerator grip 18, and the rotational speed of the accelerator grip 18 can be expressed as the angular velocity of the accelerator grip 18.

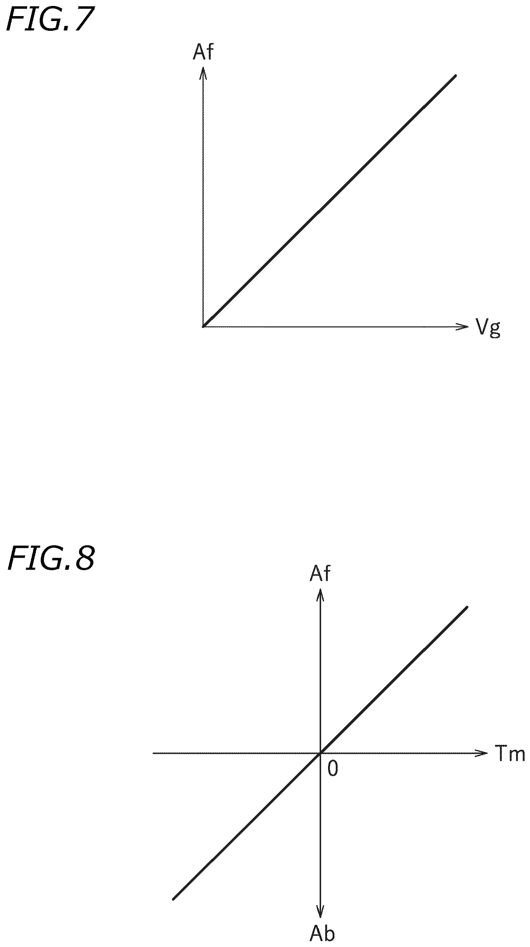

There is no particular limitation on the control performed by the motor controller 70. For example, as shown in FIG. 7, the motor controller 70 may increase the angular acceleration Af of the flywheel motor 60 in proportion to the rotational speed Vg of the throttle grip 18 when the motorcycle 1 is accelerating. This allows the grip force of the rear wheel 4 to be increased in proportion to the acceleration of the motorcycle 1. As a result, the motorcycle 1 can accelerate desirably.

The motor controller 70 may control the flywheel motor 60 based on the operation of the drive motor 30. For example, when the torque Tm of the drive motor 30 is greater than zero, as shown in FIG. 8, the motor controller 70 may increase the angular acceleration Af in the forward rotation direction of the flywheel motor 60 in proportion to the torque Tm of the drive motor 30. This allows the grip force of the rear wheel 4 to be increased in proportion to the acceleration of the motorcycle 1. As a result, the motorcycle 1 can accelerate desirably.

When the torque Tm of the drive motor 30 is smaller than zero, the motor controller 70 may increase the angular acceleration Ab in the reverse rotation direction of the flywheel motor 60 in inverse proportion to the torque Tm of the drive motor 30. This makes it possible to increase the grip force of the front wheel 2 in proportion to the deceleration of the motorcycle 1. As a result, the motorcycle 1 can decelerate desirably.

As described above, with the motorcycle 1 according to the present embodiment, the flywheel 66 rotates while accelerating in the forward rotation direction during acceleration. This generates the torque BT1 in the reverse rotation direction (see FIG. 4) on the rear wheel 4, increasing the downward load F1 on the rear wheel 4. Thus, it is possible to increase the grip force of the rear wheel 4 during acceleration, thereby improving the acceleration performance of the motorcycle 1. On the other hand, the flywheel 66 rotates while accelerating in the reverse rotation direction during deceleration. This generates the torque BT2 in the forward rotation direction (see FIG. 5) on the front wheel 2, increasing the downward load F2 on the front wheel 2. Thus, it is possible to increase the grip force of the front wheel 2 during deceleration, thereby improving the deceleration performance of the motorcycle 1.

According to the present embodiment, the motor controller 70 is configured to control the flywheel motor 60 based on the detection result of the accelerator operation sensor 18S. Therefore, the grip force of the front wheel 2 or the rear wheel 4 can be increased in accordance with the operation of the accelerator grip 18 by the passenger. The grip force of the front wheel 2 or the rear wheel 4 can be adjusted in accordance with the passenger's intention to accelerate or decelerate.

With conventional electric vehicles, it has been difficult to obtain grip force of the rear wheel during acceleration and to obtain grip force of the front wheel during deceleration. However, according to the present embodiment, even though it is an electric vehicle, it is possible to sufficiently secure grip force of the rear wheel 4 during acceleration and to sufficiently secure grip force of the front wheel 2 during deceleration.

The above describes one embodiment of a straddled vehicle, but the embodiment is merely an example, and various other embodiments are possible.

The driving source for traveling is not limited to the driving motor 30, but may be an internal combustion engine.

The power transmission member that transmits power from the driving source for traveling to the rear wheel is not limited to the chain 36, but may be a drive shaft, a transmission belt, etc.

The position of the flywheel motor 60 and the flywheel 66 is not limited to upward of the drive motor 30. For example, the flywheel motor 60 and the flywheel 66 may be arranged forward of the drive motor 30 or may be arranged rearward of the drive motor 30.

A straddled vehicle refers to a vehicle that is straddled by a passenger. The straddled vehicle is not limited to the motorcycle 1. The straddled vehicle may be an auto tricycle, an ATV (All Terrain Vehicle), or the like, for example. The driving source for traveling is not limited to those driving the rear wheel, but may be those driving the front wheel, or those driving both the front wheel and the rear wheel.

### Reference Signs List

1: Motorcycle (straddled vehicle), 2: Front wheel, 4: Rear wheel, 10: Vehicle body frame, 16: Handlebar, 18: Accelerator grip, 18S: Accelerator operation sensor, 20: Front fork (front suspension), 30: Electric motor (driving source for traveling, second electric motor), 36: Chain (power transmission mechanism), 46: Rear suspension, 60: Electric motor (first electric motor), 63: Rotating shaft, 66: Flywheel, 70: Motor controller

## Claims

1. A straddled vehicle comprising:
a front wheel;
a rear wheel arranged rearward relative to the front wheel;
a vehicle body frame supported by the front wheel and the rear wheel; and
a driving source for traveling for driving at least one of the front wheel and the rear wheel,
the straddled vehicle comprising:
a first electric motor;
a rotating shaft extending in a vehicle left-right direction that is driven by the first electric motor;
a flywheel arranged rearward of the front wheel and forward of the rear wheel, the flywheel being fixed to the rotating shaft; and
a motor controller that controls the first electric motor so as to rotate the flywheel while accelerating the flywheel in a forward rotation direction when the straddled vehicle is accelerating and rotate the flywheel while accelerating the flywheel in a reverse rotation direction when the straddled vehicle is decelerating, wherein the forward rotation direction refers to a rotation direction of the front wheel and the rear wheel when the straddled vehicle is traveling, and the reverse rotation direction refers to an opposite direction to the forward rotation direction.

2. The straddled vehicle according to claim 1, comprising:
a front suspension linked to the front wheel and the vehicle body frame;
a rear suspension linked to the rear wheel and the vehicle body frame; and
a power transmission mechanism that links the driving source for traveling and the rear wheel and transmits power from the driving source for traveling to the rear wheel,
wherein the driving source for traveling is supported by the vehicle body frame.

3. The straddled vehicle according to claim 1 or 2, wherein the flywheel is attached directly or indirectly to the vehicle body frame.

4. The straddled vehicle according to any one of claims 1 to 3, comprising:
a handlebar supported by the vehicle body frame;
an accelerator grip rotatably attached to the handlebar; and
an accelerator operation sensor that detects an operation of the accelerator grip by a passenger,
wherein the motor controller is configured to control the first electric motor based on a detection result of the accelerator operation sensor.

5. The straddled vehicle according to claim 4, wherein the motor controller is configured to increase an angular acceleration of the first electric motor in proportion to a rotational speed of the accelerator grip when the straddled vehicle is accelerating.

6. The straddled vehicle according to any one of claims 1 to 5, wherein the driving source for traveling includes a second electric motor.

7. The straddled vehicle according to claim 6, wherein the motor controller is configured to control the first electric motor based on an operation of the second electric motor.

8. The straddled vehicle according to claim 7, wherein the motor controller is configured to, when a torque of the second electric motor is greater than zero, increase an angular acceleration in the forward rotation direction of the first electric motor in proportion to the torque of the second electric motor.

9. The straddled vehicle according to claim 7, wherein the motor controller is configured to, when a torque of the second electric motor is smaller than zero, increase an angular acceleration in the reverse rotation direction of the first electric motor in inverse proportion to the torque of the second electric motor.

10. The straddled vehicle according to any one of claims 6 to 9, wherein the first electric motor is arranged upward relative to the second electric motor.

11. The straddled vehicle according to any one of claims 1 to 10, wherein the straddled vehicle is a motorcycle.
